## Europäisches Patentamt

(19) **European Patent Office**

**Office européen des brevets**

(11) Veröffentlichungsnummer: **0 005 796**

**A1**

(12) **EUROPÄISCHE PATENTANMELDUNG**

(21) Anmeldenummer: **79101587.8**

(22) Anmeldetag: **23.05.79**

(51) Int. Cl.²: **D 06 B 3/04**
**C 08 J 5/00**

(30) Priorität: **03.06.78 DE 2824376**

(43) Veröffentlichungstag der Anmeldung:
**12.12.79 Patentblatt 79/25**

(84) Benannte Vertragsstaaten:
**AT BE CH DE FR GB IT NL**

(71) Anmelder: **BAYER Aktiengesellschaft
Zentralbereich Patente,Marken und Lizenzen Bayerwerk
D-5090 Leverkusen 1(DE)**

(72) Erfinder: **Brinkmann, Karl Josef
Birkenbergstrasse 77
D-5090 Leverkussen 3(DE)**

(72) Erfinder: **Müller, Johann
Reinhard-Brauns-Strasse 8
D-5000 Köln 80(DE)**

(72) Erfinder: **Preis, Lothar, Dr.
Wolfskaul 7
D-5000 Köln 80(DE)**

(54) **Faserimprägnierverfahren und Vorrichtung.**

(57) Der zu tränkende Faserstrang (1) wird in einem Harzbad (3) mit einer Geschwindigkeit von mindestens 2 m/min durch mindestens eine konisch zulaufende Düse (4, 5, 6) und anschließend durch eine weitere Düse (7) zur Formung gezogen. Gerichtete Glasfaserstränge mit einem Glasanteil von über 70 Volumenprozent können durch Hintereinanderschalten mehrerer Düsen vollständig getränkt werden. Das Ende des in Fadenlaufrichtung im Querschnitt abnehmenden Düsenkanals soll auf der Austrittsseite nicht abgeschrägt oder abgerundet sein.

EP 0 005 796 A1

0005796

BAYER AKTIENGESELLSCHAFT          5090 Leverkusen, Bayerwerk

Zentralbereich
Patente, Marken und Lizenzen      HB-Kl

Faserimprägnierverfahren und -vorrichtung

Die Erfindung betrifft ein Verfahren zum Imprägnieren
von Endlosfasersträngen aus Glas, Kohlenstoff oder
Kunststoff mit Harz und Vorrichtungen zur Durchführung
des Verfahrens.

Unidirektional faserverstärkte Kunststoffe sind bekannt.
Sie werden aus harzimprägnierten Fasersträngen aufgebaut, die zu Formteilen gewickelt oder zu Profilen gezogen werden. Die Zugfestigkeit derartiger Formteile in
Faserrichtung kann 1500 MPa erreichen. Voraussetzung,
daß diese hohen Festigkeitswerte erreicht werden, ist ein
hoher Fasergehalt und neben der parallelen Ausrichtung der
Fäden der einwandfreie Verbund Verstärkungselement-Matrix.

Le A 18 823

Bei Fasergehalten oberhalb 50 Gew.-% wird die Herstellung eines einwandfreien Verbundes zunehmend schwieriger. Das Durchtränken des Faserstrangs mit Harz geschieht nach dem Stand der Technik z.B. mit einem Rollenimprägnierwerk. Durch vielfaches Umlenken und Quetschen der Rovings dringt das Imprägnierharz zwischen die Fasern ein. Die zwischen den Fasern eingeschlossene Luft verhindert jedoch eine 100 %ige Benetzung. Es ist daher vorgeschlagen worden, die Fasersträng in einer Vakuumstrecke vor dem Imprägnieren luftfrei zu machen, um eine vollständige Durchtränkung mit dem Harz zu erreichen. Dieses Verfahren arbeitet jedoch bei höheren Abzugsgeschwindigkeiten nicht mehr zufriedenstellend.

Bei den Quetschrollenverfahren können zudem Faserschädigungen auftreten, da die Abzugskräfte sehr hoch sein können. Ganz besonders Kohlenstoff-Fasern werden beschädigt. Die Festigkeit der verstärkten Bauteile ist durch diese Schädigungen herabgesetzt. Daneben kommt es noch leicht zu Betriebsstörungen, da gerissene Fasern auf den Umlenkwalzen aufgespult werden können, und das Imprägnierbad schneller verunreinigt wird. Durch die Umlenk- und Quetschstrecken wird das Paralellisieren der Elementarfäden im Roving behindert.

Aufgabe der Erfindung ist ein wirtschaftliches Verfahren zur Herstellung unidirektional faserverstärkter Kunststoffkörper mit hohen Fasergehalten und geringer Faserschädigung und Vorrichtungen zur Durchführung des Verfahrens. Die Aufgabe wird dadurch gelöst, daß das Faserbündel mit einer Geschwindigkeit von mindestens 2 m/min durch mindestens eine konisch zulaufende Düse im Harzbad und durch mindestens eine Düse zur Formung des getränkten Faserstrangs gezogen wird. Eine Düse zur Druchführung des Verfahrens ist dadurch gekennzeichnet, daß der Querschnitt des Düsenkanals in Fadenlaufrichtung abnimmt und der Kanal am Ende der Düse sprungartig endet.

Mit dem erfindungsgemäßen Verfahren sind beispielsweise bei der Herstellung von GFK-Profilen Abzugsgeschwindigkeiten von über 100 m/min erreichbar, wobei der Glasanteil über 60 Vol-% sein kann und die Faserschädigung durch die kleinen Abzugskräfte gering bleibt, aber eine Durchimprägnierung des gesamten Strangquerschnitts erzielt wird. Es scheint wesentlich, daß bei diesem Verfahren durch das relativ schnelle Durchziehen durch eine sich verengende Düse die eingeschlossene Luft im Faserstrang zunächst komprimiert wird und bei dem abrupten Austritt "explosionsartig" entweicht, den Faserverbund dabei aufreißt oder zumindest lockert, so daß Harz eindringen kann. Die aus den Fasern entweichende Luft ist als Glasblasen im Harz zu erkennen. Nach einer besonderen Fortbildung des erfindungsgemäßen Verfahrens wird durch Umpumpen gasblasenfreies Harz von unten oder von der Seite her an die Imprägnierdüsen zugeführt, so daß das Aufsteigen des luftbeladenen Harzes beschleunigt wird.

Eine Vorrichtung zur Durchführung des Verfahrens enthält im wesentlichen speziell geformte Düsen im Imprägnierbad durch die der Faserstrang gezogen wird, sowie eine weitere Düse zur Formung des Profiles am Ende oder außerhalb des Im-

Le A 18 823

0005796

prägnierbades. Der Querschnitt im Düsenkanal in der Imprägnierdüse im Bad nimmt in Fadenlaufrichtung ab. Bevorzugt
ist das Ende des Düsenkanals auf der Austrittsseite nicht
abgeschrägt oder abgerundet, da dort die Querschnittänderung und damit der Drucksprung auf dem bewegten Faden möglichst groß und abrupt sein soll. In einer besonderen
Ausführungsform ist der Querschnitt im Kanal kreisförmig
und nimmt quadratisch mit der Länge ab (die Form des
Kanals ist also ein Kegelstumpf). Die Querschnittsfläche
kann jedoch auch oval, rechteckig oder sternförmig sein.
Ebenso sind auch andere Formen des Verlaufs der Düsenbohrung möglich, insbesondere konkav oder konvex zulaufende konische Bohrungen.

Die Querschnittsfläche der Austrittsbohrung der Imprägnierdüse ist größer als der Faserstrangdurchmesser. Durch
die Fadenbewegung wird Harz mitgeschleppt und die Luft
komprimiert, die dann expandiert, sobald der Faden aus
der Düse austritt, dabei die Elementarfäden aus dem
Schlichteverbund löst und auseinandertreibt, so daß Harz
bis ins Innere gelangen kann. Durch Hintereinanderschalten mehrerer Düsen im Harzbad wird auch bei einem Faseranteil von über 70 % eine Durchimprägnierung erreicht.
Das Harz sorgt für eine hinreichend gute Gleitung entlang der Düsenbohrung, wobei die Fasern nicht geschädigt
werden. Eine weitere Düse am Ende des Bades streift das
überflüssige Harz vom Profil ab und formt gegebenenfalls
der Faserstrang. Die Länge der Düse ist bevorzugt 1 bis
250 ml so lang wie der Strangdurchmesser. Abhängig
von der Viskosität des verwendeten Harzes ist darauf
Rücksicht zu nehmen. Eine bevorzugte Ausführungsform
hat einen kegelstumpfartigen Düsenkanal mit dem Winkel des Kegelmantels zur Rotationsachse von

Le A 18 823

- 5 -

$1^{o}$ bis $60^{o}$, vorzugsweise von $1^{o}$ bis $5^{o}$.

Diese Düsen eignen sich zum Imprägnieren verschiedenartiger Verstärkungsfasern, wie beispielsweise Glasfasern, Kohlenstoff-Fasern, Chemiefasern mit Reaktionsharzen wie Polyester-, Epoxid- oder Polyurethanharzen.

Der Querschnitt des Kanals braucht nicht kreisförmig zu sein. Er hängt ab von dem zu fertigenden Profil, üblich sind Flachband, Rohr und Rechteck. Zum Umwickeln wird bevorzugt Flachband eingesetzt.

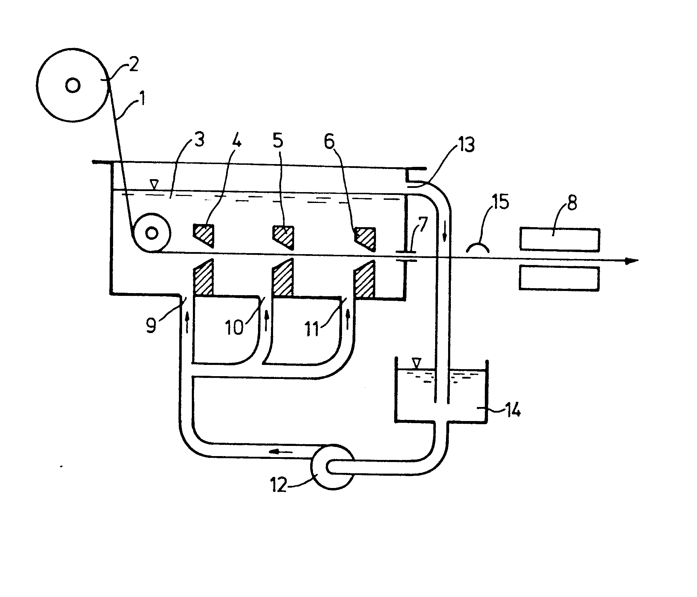

Eine Vorrichtung zum Imprägnieren von Fasersträngen ist in der Zeichnung dargestellt und im folgenden beispielhaft beschrieben.

Ein Glasfaserstrang 1 wird von der Spule 2 abgewickelt und durch ein Harzbad 3 gezogen. Er durchläuft abwechselnd 3 konisch zulaufende Düsen 4,5,6 und das Harzbad. Nach der Abstreifdüse 7 gelangt er in eine Heizanlage 8, in anderen Anwendungsfällen kann beispielsweise eine Wickelanlage dazwischengeschaltet sein. Damit um den Strang 1 immer blasenfreies Harz vorhanden ist, wird unter jeder Düse 9,10,11 entgastes Harz eingepumpt 12. Das luftblasenangereicherte Harz wird über 13 einer Entgasungswanne 14 zugeleitet. Die umgepumpte Harzmenge wird vorzugsweise über ein abzugsgeschwindigkeitsabhängiges Meßsystem 15 gesteuert.

Patentansprüche

1) Verfahren zum Imprägnieren von Endlosfasersträngen aus Glas, Kohlenstoff oder Kunststoff mit Harz, dadurch gekennzeichnet, daß der Faserstrang mit einer Geschwindigkeit von mindestens 2 m/min durch mindestens eine konisch zulaufende Düse im Harzbad und durch mindestens eine Düse zur Formung des getränkten Strangs gezogen wird.

2) Verfahren nach Anspruch 1, dadurch gekennzeichnet, daß unterhalb der Düsen das luftbeladene Harz von blasenfreiem Harz verdrängt wird.

3) Düse zur Durchführung des Verfahrens nach Ansprüchen 1 und 2, dadurch gekennzeichnet, daß der Querschnitt des Düsenkanals in Fadenlaufrichtung abnimmt und der Kanal am Ende der Düse sprungartig endet.

4) Düse nach Anspruch 3, dadurch gekennzeichnet, daß der Querschnitt des Düsenkanals in Fadenlaufrichtung stetig abnimmt.

5) Düse nach Ansprüchen 3 und 4, dadurch gekennzeichnet, daß die Form des Düsenkanals kegelstumpfartig ist, wobei der Winkel des Kegelmantels zur Rotationsachse $1^{\circ}$ bis $60^{\circ}$, vorzugsweise $1^{\circ}$ bis $5^{\circ}$, beträgt.

6) Düse nach Ansprüchen 3 bis 5, dadurch gekennzeichnet, daß die Länge des Düsenkanals vorzugsweise das 1 bis 250 fache des Strangdurchmessers ist.

Le A 18 823

7) Düse nach Ansprüchen 3, 4, 6, dadurch gekennzeichnet,
   daß der Querschnitt des Kanals nicht kreisförmig ist.

**Le A 18 823**

## Europäisches Patentamt

### EUROPÄISCHER RECHERCHENBERICHT

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | D 06 B 3/04<br>C 08 J 5/00 |
| X | DE - C - 749 220 (ROLF HIELLE)<br>* Das ganze Dokument * | 1,3-7 | |
| | -- | | |
| X | DE - C - 813 699 (ROLF HIELLE)<br>* Das ganze Dokument * | 1,3-7 | |
| | -- | | |
| | US - A - 3 905 327 (OPI)<br>* Anspruch 1; Spalte 3, letzter Absatz * | 1,2 | **RECHERCHIERTE SACHGEBIETE (Int. Cl.²)** |
| | -- | | D 06 B |
| | US - A - 2 539 549 (WESTERN ELECTRIC)<br>* Das ganze Dokument * | 1,2 | |
| | -- | | |
| | BE - A - 648 085 (PLASTI-CLAD)<br>* Abbildung 2; Ansprüche 1,2 * | 1,3,4 | |
| | -- | | |
| A | US - A - 2 456 650 (REDDING)<br>* Abbildungen 1,2 * | 1 | **KATEGORIE DER GENANNTEN DOKUMENTE** |
| | -- | | X: von besonderer Bedeutung |
| A | US - A - 3 241 343 (MASAHIDE YAZAWA)<br>* Anspruch 1; Abbildung 1 * | 1 | A: technologischer Hintergrund<br>O: nichtschriftliche Offenbarung<br>P: Zwischenliteratur<br>T: der Erfindung zugrunde liegende Theorien oder Grundsätze |
| | ---- | | E: kollidierende Anmeldung<br>D: in der Anmeldung angeführtes Dokument<br>L: aus andern Gründen angeführtes Dokument |

Der vorliegende Recherchenbericht wurde für alle Patentansprüche erstellt.

&: Mitglied der gleichen Patentfamilie, übereinstimmendes Dokument

| Recherchenort | Abschlußdatum der Recherche | Prüfer |
|---|---|---|
| Den Haag | 27-08-1979 | PETIT |

EPA form 1503.1  06.78